Europäisches Patentamt

European Patent Office

Office européen des brevets

(11) Publication number: **0 038 555**
**B1**

(12) **EUROPEAN PATENT SPECIFICATION**

(45) Date of publication of patent specification: **22.08.84**

(21) Application number: **81103015.4**

(22) Date of filing: **21.04.81**

(51) Int. Cl.³: **B 29 D 3/02, B 29 D 23/00, B 29 C 1/00**

(54) **Mold for molding a sleeve-equipped reinforced plastic tubular body, and method for handling the mold.**

(30) Priority: **21.04.80 JP 53383/80**
**21.04.80 JP 55090/80**

(43) Date of publication of application:
**28.10.81 Bulletin 81/43**

(45) Publication of the grant of the patent:
**22.08.84 Bulletin 84/34**

(84) Designated Contracting States:
**DE FR GB IT NL SE**

(56) References cited:
**GB-A-1 377 517**
**US-A-2 614 058**
**US-A-3 341 387**

**Patents Abstracts of Japan, Vol. 4, No.123, 30 August 1980, page 127M29**
**Patents Abstracts of Japan, Vol. 4, No.33, 21 March 1980, page 8M3**

(73) Proprietor: **SEKISUI KAGAKU KOGYO KABUSHIKI KAISHA**
**2-4-4 Nishitenma**
**Kita-ku Osaka (JP)**

(72) Inventor: **Mayumi, Masakatsu**
**6-30, Nishi 1-chome**
**Nakagawa, Ikuno-ku Osaka-shi, Osaka-fu (JP)**
Inventor: **Okuyama, Takeshi**
**2-3, Saga Tenryuji, Nakajima-cho**
**Ukyo-ku, Kyoto-shi Kyoto-fu (JP)**
Inventor: **Mitooka, Kenji**
**2983, Kozu Minamikata**
**Okayama-shi Okayama-ken (JP)**

(74) Representative: **Tiedtke, Harro, Dipl.-Ing. et al**
**Patentanwaltsbüro Tiedtke-Bühling-Kinne-Grupe-Pellmann-Grams Bavariaring 4**
**D-8000 München 2 (DE)**

Courier Press, Leamington Spa, England.

## Description

This invention relates to a mold for molding a sleeve-type or socket-equipped reinforced plastic tubular body, such as a pipe coupling, and to a method for handling the mold.

The term "reinforced plastic tubular body", as used herein, denotes a tubular article molded from a molding material comprising a synthetic resin, for example a thermosetting resin such as an unsaturated polyester, and a reinforcing material such as glass fibers.

In the production of socket- or sleeve-equipped reinforced plastic tubular bodies, it has been the practice to perform molding in a mold which is built by providing two stepped hollow cylindrical members consisting of a large-diameter section and a small-diameter section and having an equal outside diamter at the large-diameter sections, joining the end surface of the small-diameter section of one of the hollow cylindrical members and the end surface of the large-diameter section of the other hollow cylindrical member concentrically and splittably to form a mold member for molding a coupling section, and splittably joining a plurality of such mold members for molding a coupling section at the end surfaces of their small-diameter cylindrical sections either directly or through an intermediate mold member (e.g., Japanese Laid-Open Utility Model Publication No. 100863/1973), or to perform molding using a core built by joining at least two mold members detachably (e.g., Japanese Laid-Open Patent Publication No. 123464/1977). However, these molding devices are not constructed such that pipe couplings of different shapes or different sizes can be molded by a single molding device. Accordingly, these prior techniques have the defect that separate molds must be provided for molding sleeve-equipped reinforced plastic tubular bodies of different shapes or sizes and the cost of production becomes enormous. Moreover, a great force is required to pull out a mold after a reinforced plastic moulding material composed of a resin and a reinforcing material is wound around the mold and then cured into a molded article. Thus, the conventional techniques have the defect that a large-scale equipment using a hydraulic jack, etc. is required, and the operation is troublesome and complex, as it can be seen from US—PS 3341387 for example where a mold must be used which is segmented and can collapse.

It is an object of this invention to remove the aforesaid defects, and to provide a mold which is adapted for molding tubular bodies, such as a pipe coupling, of various shapes or sizes using a single mold construction.

Another object of this invention is to provide a mold which can be easily pulled out from a molded tubular body when molding the tubular body composed of a reinforced plastic molding material around the mold.

These objects are achieved by the mold with the features indicated in the patent claim 1.

The present invention provides a mold for molding a sleeve-equipped reinforced plastic tubular body; the handling steps being: assembling a main mold body having a tubular section and a sleeve-molding member slidable axially along the periphery of the tubular section of the main body and fixable at a predetermined position to the tubular section of the main body into a mold by fixing the sleeve-molding member at said predetermined position to the tubular section of the main body; fixing an annular member to the socket molding member; forming a layer of a reinforced plastic molding material around the resulting mold and curing it, and thereafter pulling out the main mold body and the sleeve-molding member axially from the cured plastic layer.

Since the annular member is held axially slidable on the periphery of sleeve-molding member, the main body of the mold and the sleeve-molding member can be simultaneously pulled out from the cured resin layer by pushing the sleeve-molding member connected to the main mold member against the annular member, which prevents the fresh cured tubular body from being damaged.

The main body of the mold can also be pulled out separately from the cured plastic layer by pushing the main body of the mold against the sleeve-molding member thereby slidably moving the main body and the sleeve-molding member relative to each other.

The axially slidable annular member which is provided about the periphery of the sleeve-molding member can be pulled out of the sleeve-molding member from the cured plastic layer by pushing the sleeve-molding member against the annular member thereby slidably moving the sleeve-molding member and the annular member relative to each other.

Advantageous means for effecting the pulling out of the mold parts from the fresh cured tubular body are described in the sub claims. The expression "sorts of bolts" means that these sorts have special tasks, i.e. fixing the predetermined distance between the socket molding member and the protrusion of the main body and pulling out the mold part(s). These sorts of bolts can be performed identically and yet function differently. The screw holes for receiving the one sort of bolts need not be the same holes as for receiving the other sort of bolts.

Specific embodiments of the invention are described below with reference to the accompanying drawings in which:

Figure 1 is a sectional view of a mold for molding a sleeve-type pipe coupling in accordance with one embodiment of the present invention;

Figure 2 is a partly broken-away perspective view showing a part of the mold of Figure 1 on an enlarged scale;

Figure 3 is a sectional view showing a method for molding a sleeve-type pipe coupling using the mold shown in Figure 1;

Figure 4 is a sectional view showing a method for pulling out the main body of the mold after production of a pipe coupling;

Figure 5 is a sectional view showing a method for pulling out the sleeve-molding member of the mold after production of the pipe coupling;

Figure 6 is a sectional view showing a mold for producing an elbow-type pipe coupling in accordance with another embodiment of the invention;

Figure 7 is a sectional view showing a mold for production of a cheese-type pipe coupling in accordance with still another embodiment of the invention;

Figure 8 is a partial sectional view showing yet another embodiment of the invention; and

Figures 9 and 10 are partial sectional views showing on an enlarged scale details of the sleeve-molding member shown in Figure 8.

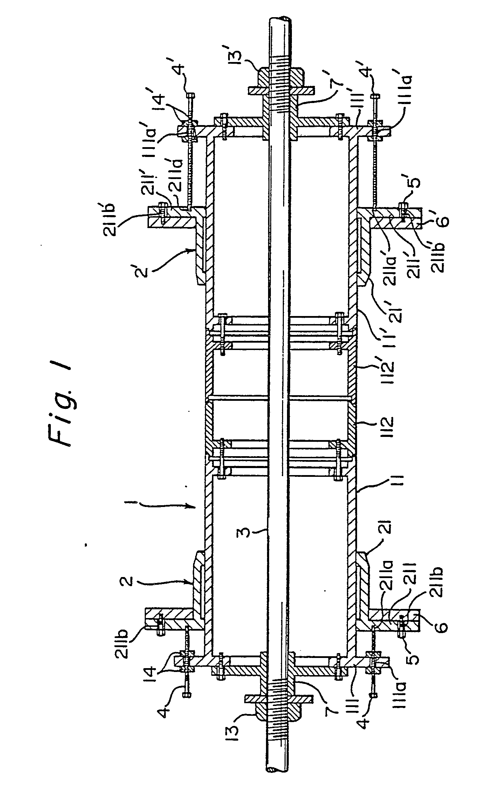

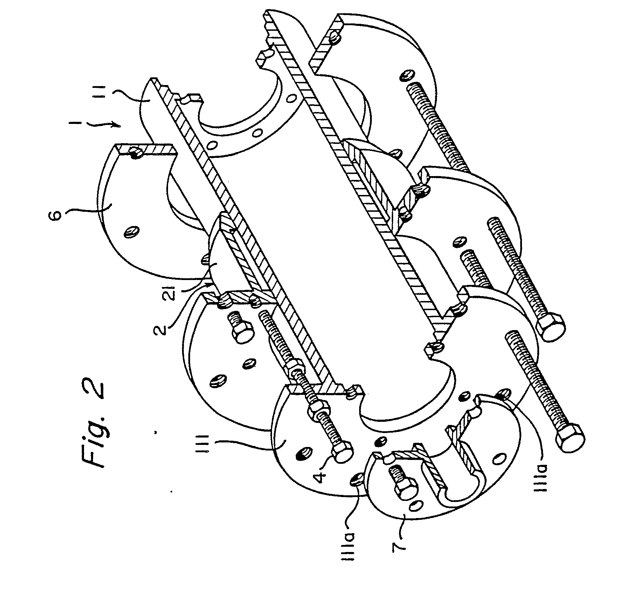

Referring to Figures 1 and 2, the reference numeral 1 represents a main body of a mold which consists of a pair of tubular members 11 and 11' having a portion with substantially the same outside diameter as the inside diameter of a central portion of a sleeve or socket-equipped reinforced plastic tubular body to be molded and annular flange portions 111 and 111' protruding respectively from the outside ends of the tubular members 11 and 11' diametrically outwardly. To each of the axially inward ends of the tubular members 11 and 11' is connected one end each of short tubular members 112 and 112', with the other ends of the short tubular members 112 and 112' being in abutment against each other. A plurality of screw holes 111a and 111a' are provided in diametrically outwardly protruding portions of the flanges 111 and 111' respectively, and long bolts 4 and 4' are inserted loosely through the holes 111a and 111a' and can be fixed to the flange portions 111 and 111' by means of nuts 14 on both sides of the flanges 111 and 111' respectively.

The reference numerals 2 and 2' represent sleeve-molding members consisting respectively of relatively short cylindrical members 21 and 21' and flange portions 211 and 211' provided at one end each of the cylindrical members 21 and 21'. Each short cylindrical member 21 or 21' has a configuration conforming to the inner surface shape of a sleeve of a reinforced plastic tubular body to be molded, and the minimum inside diameter of each of the short cylindrical members 21 and 21' and the flange portions 211 and 211' is made substantially equal to the outside diameter of the tubular members 11 and 11'. The flange portions 211 and 211' have provided therein screw holes 211b and 211b', and female screw portions 211a and 211a' which threadably receive the long bolts 4 and 4' inserted through the holes 111a and 111a' of the main body 1. Into the screw holes 211b and 211b' are loosely inserted short bolts 5 and 5'. Annular members designed as plates 6 and 6' which are slidable along the periphery of the cylindrical members 21 and 21' can be fixed to the axial inside surfaces of the flanges 211 and 211' by means of the bolts 5 and 5'.

The reference numeral 3 represents a shaft having a male screw portion provided on its peripheral surface at a position near each end thereof.

The reference numerals 7 and 7' represent coupling members each consisting of a short tubular portion and a flange portion. The shaft 3 is inserted into the short tubular portions and fixed to the flanges 111 and 111' of the main body 1 by the flange portions.

In assembling a mold for sleeve-type pipe couplings, the sleeve-molding members 2 and 2' having fixed thereto the annular plates 6 and 6' are axially slidably mounted on the tubular members 11 and 11' of the main body 1, and then the ends of the short tubular members 112 and 112' are caused to abut each other. Then, the main body 1 is fixed to the shaft 3 by means of nuts 13 and 13' through the coupling members 7 and 7'. Thereafter, the long bolts 4 and 4' are screwed into the female screw portions 211a and 211a' of the sleeve-molding member 2 and 2', and fixed at suitable positions to the flange portions 111 and 111' by means of the nuts 14 and 14' on both sides each of the flanges 111 and 111', thus fixing the sleeve-molding members 2 and 2' to the mian body 1 at predetermined positions. Thus, a mold for sleeve-type pipe couplings is built.

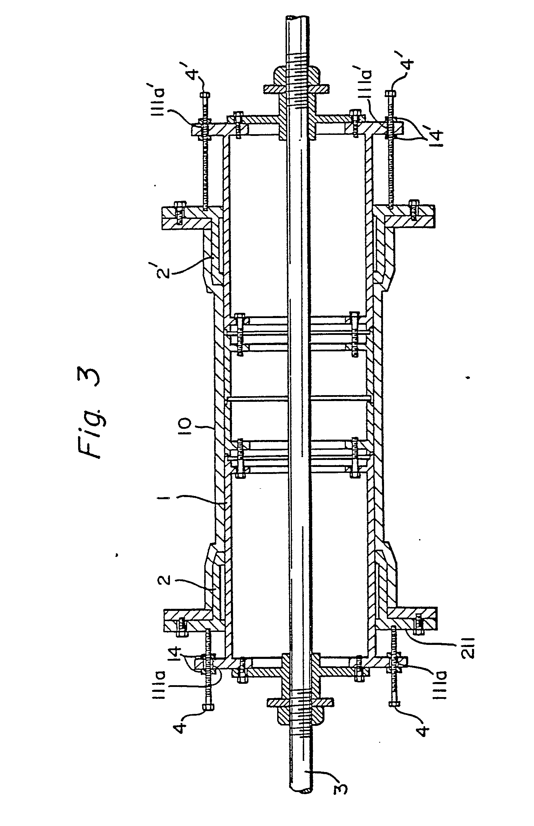

Figures 3 to 5 are sectional views for illustrating a method for molding a sleeve-type pipe coupling in accordance with one embodiment of the invention using the mold shown in Figures 1 and 2.

As shown in Figure 3, a reinforced plastic molding material obtained by impregnating an unsaturated polyester resin in a reinforcing material such as a glass roving is wound around the main body 1 and the sleeve-molding members 2 and 2' of the mold assembled as above to form a reinforced plastic molding material layer 10. The layer 10 is then cured.

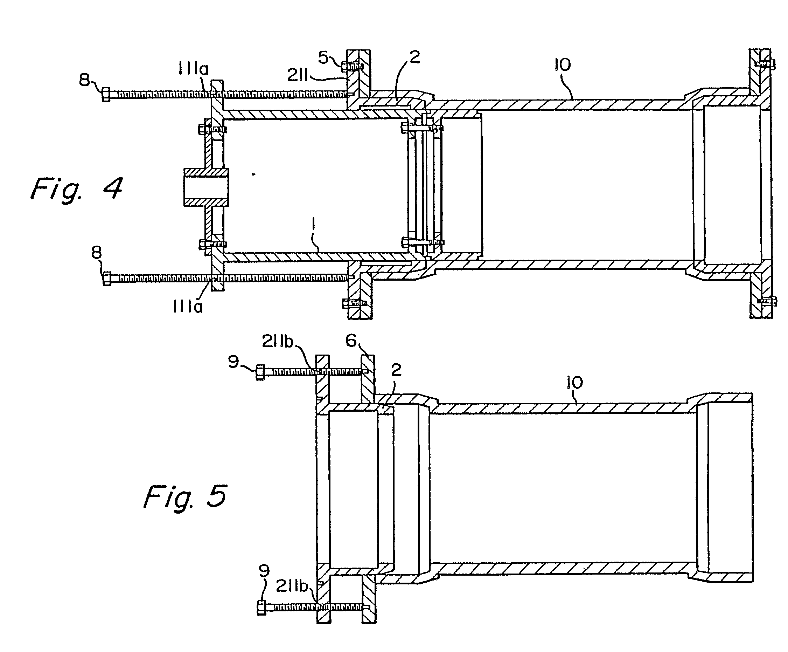

Then, the nuts 13 and 13' threadably fitted to the shaft 3 are removed and the shaft 3 is pulled out. Furthermore, the long bolts 4 are pulled out by removing the nuts 14 and 14'. In place of them, long bolts 8 are threadably fitted into the screw holes 11a, and their leading ends are caused to abut against the flange portion 211 of the sleeve-molding member 2. Then, the bolts 8 are further screwed into the screw holes 111a to move the main body 1 away from the sleeve-molding member 2. Thus, the main body 1 is pulled out from the inside surface of the reinforced plastic molding material layer 10. (See Figure 4.)

Thereafter, the short bolts 5 are pulled out, and long bolts 9 are threadably fitted into female screws provided in the screw holes 211b and their leading ends are caused to abut the annular plate 6. The bolts 9 are then further screwed into the holes 211b to move the sleeve-molding member 2 away from the annular plate 6. Thus, the sleeve-molding member 2 is pulled out from the inside surface of the sleeve portion of the reinforced plastic molding material layer 10 (see Figure 3). As a result, molding of a sleeve-type pipe coupling is completed.

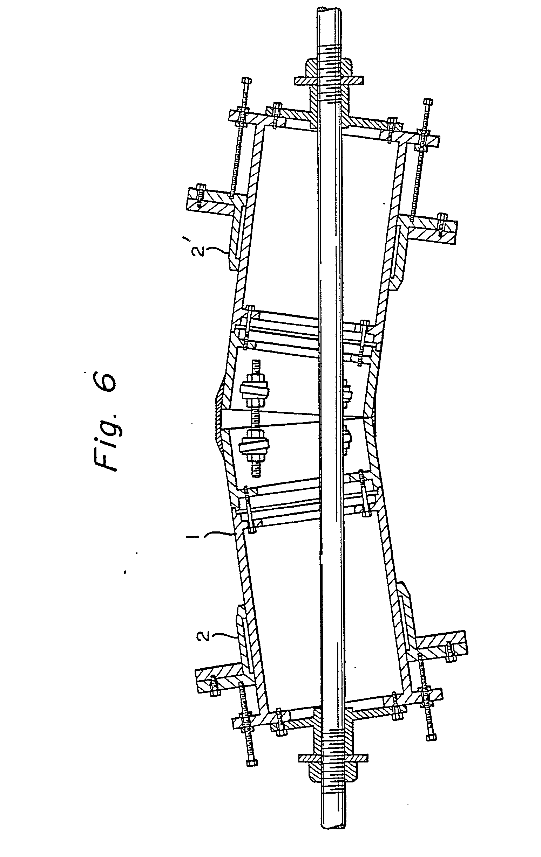

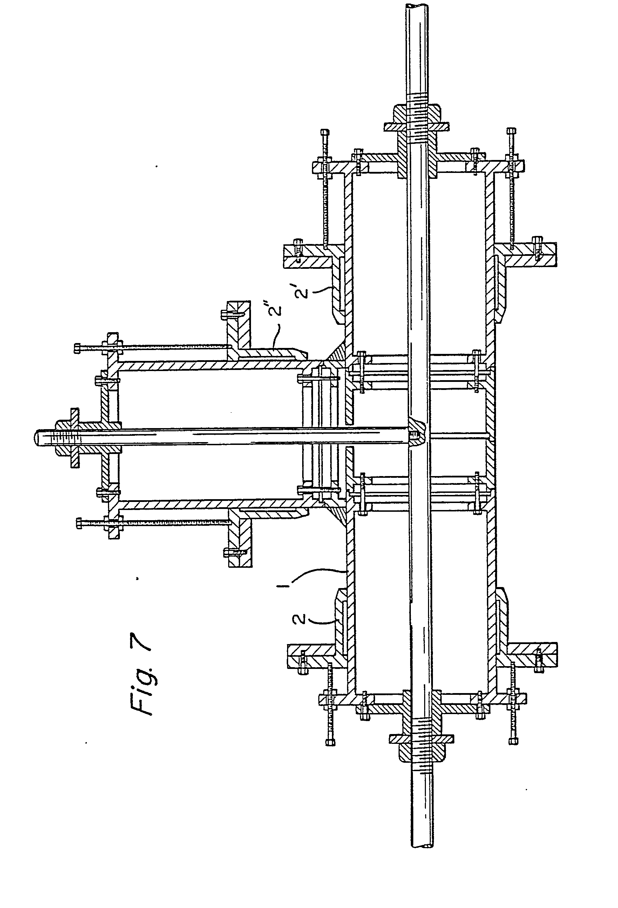

By using a mold shown in Figure 6 and a mold shown in Figure 7, an elbow-type pipe coupling and a cheese-type pipe coupling can respectively be formed by providing sleeve-forming molds 2, 2', or 2, 2', 2'' at predetermined positions of the main body 1 of the mold.

As stated hereinabove, by adjusting the minimum inside diameter of the cylindrical members 21 and 21' and the flange portions 211 and 211' of the sleeve-molding portions 2 and 2' to substantially the same value as the outside diameters of the tubular members 11 and 11' of the main body 1, the sleeve-molding members 2 and 2' can be easily caused to slide axially outwardly of the main body 1 and can be fixed at a predetermined position.

Furthermore, by pushing the main body 1 against the sleeve-molding member 2, the main body 1 can be easily pulled out.

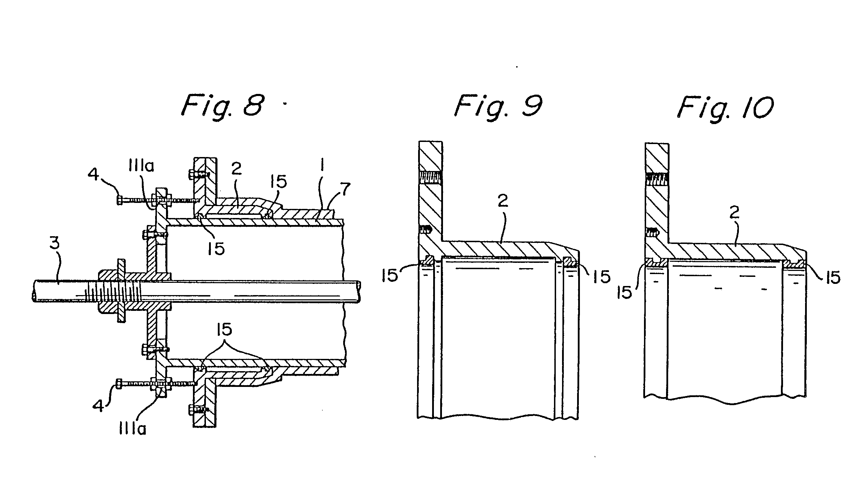

As shown in Figure 8, a cushioning member 15 may be provided at that part of the sleeve-molding member 2 which makes contact with the outside surface of the tubular member 11 of the main body 1. Provision of the cushioning member 15 serves to prevent the surface of the tubular member 11 from being injured at the time of the sliding of the tubular member 11, and also to prevent a resin from coming into the gap between the tubular member 11 and the sleeve-molding member 2 during the molding process.

The cushioning member may be made of a material having a lower hardness than the material which constitutes the mold. For example, if the mold is made of a steel material, the cushioning member may be composed of a less hard metal such as copper, an elastomeric material (such as rubber), wood, plastics, etc.

A cushioning member which is used at that part which may possibly make contact with a thermosetting resin as a material for reinforced plastic pipes during molding should not be adhesive to the such a resin, nor impair curing of the resin, nor undergo a corrosive attack of the resin. For this purpose, silicone rubbers, Teflon, etc. are suitable as the cushioning member.

It is necessary that the cushioning member should not be removed off when the sleeve-molding member slides over the main body of the mold. Thus, the cushioning member may be fixed, for example, by providing a raised or depressed portion at that part of the sleeve-molding member 2 to which is fixed the cushioning member 15, and fitting a cushioning member 15 having a depressed or raised portion having a corresponding configuration to the raised or depressed portion of the sleeve-molding member 2 into the raised or depressed portion. Preferably, a cushioning member of a relatively soft material is used at the end portion of the sleeve-molding member, which may possibly contact the resin during molding, so as not to permit intrusion of the resin, and a hard cushioning material is used at the other portions. In this way, the intrusion of the resin is prevented by the soft material and injuring of the surface of the main body of the mold is prevented by the hard material. At the same time, this serves to effect centering of the main body and the sleeve-molding member.

In the specific embodiments described hereinabove with regard to Figures 1 to 5, in fixing the sleeve-molding member 2 to a predetermined position of the main body 1, elongated bolts 4 freely passable through the screw holes 11a are used and fixed by means of nuts 14, and in pushing the main body 1 against the sleeve-molding member 2, the elongated bolts 4 are pulled out and instead, thicker bolts 8 having a male screw portion screwable into the screw holes 11a are used. In an alternative embodiment, separate screw holes 111a may be used for the elongated bolts 4 and the thick bolts 8, and this permits omission of a step of pulling out the elongated bolts 4. Or it is possible to use a method which comprises using a thick bolt 8 having a male screw screwable into the screw holes 111a, fixing the sleeve-molding member 2 by fixing the bolts 8 by means of nuts 14, and when the main body is to be pushed against the sleeve-molding member, removing the nuts 14, and screwing the bolt 8 into the screw hole 111a. The same can be said with reference to the bolts 5 and 9 in Figure 5, and bolts 9 which are threadably received by the screw holes 211b from the start can be used.

In the above embodiment, the portion protruding inwardly and outwardly in the diametrical direction from the main body 1 and the portion protruding outwardly from the sleeve-molding member 2 are both annular flanges. But they are not necessarily annular. Instead, the projecting portions may, for example, be composed of a plurality of radially extending pieces. From the standpoint of strength, however, annular flanges are desirable.

In the embodiments described hereinabove with reference to Figures 4 and 5, the mold is pulled out from the molded plastic tub pipe by first pulling out the main body and then the sleeve-molding member. It is possible to perform the pulling out of the main body and the sleeve-molding member simultaneously by pushing the sleeve-molding member connected to the main mold member against the annular member.

With the above described assembly a socket-fitted reinforced plastic tubular body can be produced by using a mold obtained by assembling a main body and sleeve-molding members fixable and axially slidable to and along the outside surface of the main body. Accordingly, by providing sleeve-molding members of different configurations and sizes and using them exchangeably according to the configuration and size of the desired molded article, tubular bodies having a sleeve of different configurations and sizes can be molded as required. Furthermore, by adjusting the fixing position of the sleeve-molding member with regard to the main body of the mold, tubular bodies having a tubular section of different lengths can be produced by using one type of mold.

Removal of the mold from the resulting tubular body after molding is effected by pushing the sleeve-molding member connected to the main mold member against the annular member, or by pushing the main body of the mold against the sleeve-molding member, or the sleeve-molding member against the annular member. Pushing can be accomplished by a simple operation of screwing a bolt into a screw hole. Thus, no large-sized device is required, and the process is economical.

The provision of a cushioning member at that inner circumferential part of the sleeve-molding member which contacts the main body of the mold serves to prevent the surface of the tubular section of the main body from being injured, and also to prevent a resin from coming into the gap between the main body of the mold and the sleeve-molding member during the molding operation.

## Claims

1. A mold for molding a socket- or sleeve-equipped reinforced plastic tubular body, comprising a main body (1) having a tubular section (11, 11') and a sleeve-molding member (2, 2') having a short cylindrical section, characterized in that

said sleeve-molding member (2, 2') is axially slidable along the periphery of and fixable at a predetermined position to the tubular section (11, 11') of the main body (1), and further characterized by

a annular member (6, 6') which is axially slidable along the periphery of and fixable at a predetermined position to the cylindrical section of said sleeve-molding member (2, 2'),

means (4, 8, 14, 111, 211, 211a) for allowing said sleeve-molding member (2, 2') to slide along or be fixed to the tubular section of the said main body (1), and

means (5, 9, 211b, 6) for allowing said annular member (6, 6') to slide along or be fixed to the cylindrical section of said sleeve-molding member (2, 2').

2. The mold of claim 1, characterized in that said means for allowing said sleeve-molding member (2, 2') to slide along or to be fixed to said tubular section (11, 11') of said main body (1) comprises a protruding portion (111, 111') protruding outwardly in the diametrical direction of said tubular section (11, 11') and having a plurality of screw holes (111a, 111a') for receiving two kinds of bolts (4, 4', 8), one kind of bolts (4, 4') being adapted to threadably engage female screw portions of said sleeve-molding member (2, 2') and to pass fixably through said screw holes, and the other kind of bolts (8) being adapted to threadably engage said screw holes (111a, 111a') and to abut with their respective leading ends said sleeve-molding member (2, 2') to push the same relative to the main body (1) when advancing said bolts (8).

3. The mold of claim 1 or 2, characterized in that said means for allowing said sleeve-molding member (2, 2') to slide along or be fixed to the tubular section (11, 11') of said main body (1) comprises a protruding portion (211, 211') protruding substantially radially outwards from the sleeve-molding member (2) at the end remote from the plastic tubular body (10) and having a plurality of screw holes (211b, 211b') for receiving two kinds of bolts (5, 5', 9), one kind of bolts (5, 5') being adapted to threadably engage female screw portions in said annular member (6, 6') for fixing the same to said sleeve-molding member (2, 2'), and the other kind of bolts (9) being adapted to threadably engage said screw holes (211b) and to abut with their respective leading ends the annular member (6, 6') for moving the socket-molding member away from said annular member (6, 6') while advancing said bolts (9).

4. A method of removing the mold parts of one of the claims 1 to 3 from the molded tubular body (10), characterized in that the main body (1) of the mold and said sleeve-molding member (2, 2') are pulled out from the tubular body (10) by pushing an assembly of said sleeve-molding member (2, 2') and said main body (1) connected to each other against the annular member (6).

5. A method of removing the mold parts of one of the claims 1 to 3 from the molded tubular body (10), characterized in that the main body (1) is removed from the cured tubular body (10) by pushing the main body against said sleeve-molding member (2, 2') thereby slidably moving the main body (1) and said sleeve-molding member (2, 2') relative to each other.

6. The method of claim 5, characterized in that the pulling out of said sleeve-molding member (2, 2') from said cured tubular body (10) is effected by pushing said sleeve-molding member (2, 2') against said annular member (6, 6') thereby slidably moving said sleeve-molding member (2, 2') and said annular member (6, 6') relative to each other.

## Revendications

1. Moule destiné à mouler un corps tubulaire en matière plastique renforcée à manchon ou emboîtement, comprenant un corps principal (1) présentant une section tubulaire (11, 11') et un élément de moulage de manchon (2, 2') présentant une section cylindrique courte, caractérisé en ce que l'élément de moulage de manchon (2, 2') peut coulisser axialement suivant le périphérie de la section tubulaire (11, 11') du corps principal (1) et y être fixé dans une position prédéterminée, et en ce qu'il comprend un élément annulaire (6, 6') pouvant coulisser axialement suivant la périphérie de la section cylindrique de l'élément de moulage de manchon (2, 2') et y être fixé dans une position prédéterminée, des moyens (4, 8, 14, 111, 211, 211a) pour permettre à l'élément de moulage de manchon (2, 2') de coulisser suivant la section tubulaire du corps principal (1) ou d'y être fixé, et des moyens (5, 9, 211b, 6) pour permettre audit élément annulaire (6, 6') de coulisser suivant la section cylindrique de l'élément de moulage de manchon (2, 2') ou d'y être fixé.

2. Moule selon la revendication 1, caractérisé en ce que les moyens pour permettre à l'élément de moulage de manchon (2, 2') de coulisser suivant la section tubulaire (11, 11') du corps principal (1) ou d'y être fixé comprend une portion en saillie (111, 111') faisant saillie vers l'extérieur dans la direction diamétrale de la section tubulaire (11, 11') et comportant une pluralité de trous taraudes (111a, 111a') destinés à recevoir deux types de boulons (4, 4', 8), les boulons du premier type (4, 4') étant susceptibles d'être vissés dans des portions taraudées de l'élément de moulage de manchon (2, 2') et de traverser les trous taraudés en étant fixés, et les boulons du second type (8) étant susceptibles d'être vissés dans les trous taraudés (111a, 111a') et de toucher par leurs extrémités de tête respectives l'élément de moulage de manchon (2, 2') pour le pousser par rapport au corps principal (1), lorsqu'on fait avancer lesdits boulons (8).

3. Moule selon la revendication 1 ou 2, caractérisé en ce que les moyens pour permettre à l'élément de moulage de manchon (2, 2') de coulisser suivant la section tubulaire (11, 11') du corps principal (1) ou d'y être fixé consistent en une portion en saillie (211, 211') faisant saillie sensiblement radialement à l'extérieur de l'élément de moulage de manchon (2) à l'extrémité éloignée du corps tubulaire plastique (10) et comportant une pluralité de trous taraudés (211b, 211b') destinés à recevoir deux types de boulons (5, 5', 9), les boulones du premier type (5') étant susceptibles d'être vissés dans des portions taraudées de l'élément annulaire (6, 6') pour le fixer à l'élément de moulage de manchon (2, 2') et les boulons du second type (9) étant susceptibles d'être vissés dans les trous taraudes (211b) et de toucher par leurs extrémités de tête respectives, l'élément annulaire (6, 6') pour éloigner l'élément de moulage de manchon de l'élément annulaire (6'), tout en faisant avancer les boulons (9).

4. Procédé pour retirer les parties de moule selon l'une quelconque des revendications 1 à 3 du corps tubulaire moulé (10), caractérisé en ce que l'on retire le corps principal (1) du moule et l'élément de moulage de manchon (2, 2') du corps tubulaire (10) en poussant un ensemble comprenant l'élément de moulage de manchon (2, 2') et le corps principal (1) reliés mutuellement contre l'élément annulaire (6).

5. Procédé pour retirer les parties de moule selon l'une quelconque des revendications 1 à 3 du corps tubulaire moulé (10), caractérisé en ce qu'on retire le corps principal (1) du corps tubulaire durci (10) en poussant le corps principal contre l'élément de moulage de manchon (2, 2') de façon à faire coulisser le corps principal (1) et l'élément de moulage de manchon (2, 2') l'un par rapport à l'autre.

6. Procédé selon la revendication 5, caractérisé en ce qu'on retire l'élément de moulage de manchon (2, 2') du corps tubulaire durci (10) en poussant l'élément de moulage de manchon (2, 2') contre l'élément annulaire (6, 6'), de façon à faire coulisser l'élément de moulage (2, 2') et l'élément annulaire (6, 6') l'un par rapport à l'autre.

## Patentansprüche

1. Form zur Formgebung eines mit einem Verbindungsstutzen bzw. einer Muffe versehenen rohrförmigen verstärkten Plastikkörpers, mit einem Hauptgehäuse (1) mit einem rohrförmigen Abschnitt (11, 11') und einem muffenformenden Element (2, 2') mit einem kurzen zylindrischen Abschnitt, dadurch gekennzeichnet, daß das muffenformende Element (2, 2') entlang des Umfangs des rohrförmigen Abschnitts (11, 11') des Hauptgehäuses (1) axial gleitbar und in einer bestimmten Position an diesem feststellbar ist, und ferner gekennzeichnet durch ein ringförmiges Element (6, 6'), das entlang des Umfangs des zylindrischen Abschnitts des muffenenformenden Elements (2, 2') axial gleitbar und an diesem in einer bestimmten Position feststellbar ist, durch eine Einrichtung (4, 8, 14, 111, 211, 211a), die ein Gleiten bzw. Feststellen des muffenformenden Elements (2, 2') entlang bzw. an dem rohrförmigen Abschnitt des Hauptgehäuses (1) zuläßt, und durch eine Einrichtung (5, 9, 211b, 6), die ein Gleiten bzw. Feststellen des ringförmigen Elements (6, 6') entlang bzw. an dem zylindrischen Abschnitt des muffenformenden Elements (2, 2') zuläßt.

2. Die Form nach Anspruch 1, dadurch gekennzeichnet, daß die Einrichtung, die ein Gleiten bzw. Feststellen des muffenformenden Elements (2, 2') entlang bzw. an dem rohrförmigen Abschnitt (11, 11') des Hauptgehäuses (1) zuläßt, einen vorspringenden Abschnitt (111, 111') umfaßt der in Durchmesser-Richtung nach außen von dem rohrförmigen Abschnitt (11, 11') hervorsteht und mehrere Schraubenlöcher (111a, 111a') zur Aufnahme von zwei Arten von Schraubenbolzen (4, 4', 8) hat, wobei eine Art der Schraubenbolzen (4, 4') in Innengewindeabschnitte des muffenformenden Elements (2, 2') eingeschraubt und befestigt durch die Gewindebohrungen gehen kann, während die andere Art der Schraubenbolzen (8) in die Schraubenlöcher (111a, 111a') eingeschraubt werden kann und mit ihren entsprechenden vorderen Enden an das muffenformende Element (2, 2') anstoßen kann, um dieses relativ zum Hauptgehäuse (1) zu verschieben, wenn die Schraubenbolzen (8) vorwärts bewegt werden.

3. Die Form nach Anspruch 1 oder 2, dadurch gekennzeichnet, daß die Einrichtung, die ein Gleiten bzw. Feststellen des muffenformenden Elements (2, 2') entlang bzw. an dem rohrförmigen Abschnitt (11, 11') des Hauptgehäuses (1) zuläßt, einen vorspringenden Abschnitt (211, 211') umfaßt, der im wesentlichen radial nach außen über das muffenformende Element (2) an dem Ende, das von dem rohrförmigen Plastikkörper (10) abgewandt ist, hervorsteht und mehrere Schraubenöffnungen (211b, 211b') zur Aufnahme von zwei Arten von Schraubenbolzen (5, 5', 9) hat, wobei eine Art von Schraubenbolzen (5, 5') in Innengewindeabschnitte im ringförmige Element (6, 6') zur Befestigung desselben an dem muffenformenden Element (2, 2') eingeschraubt werden kann, während die andere Art von Schaubenebolzen (9) in die Schraubenöffnungen (211b) eingeschraubt werden und mit ihren entsprechenden vorderen

Enden an das ringförmige Element (6, 6') anstoßen kann, um das muffenformende Element von dem ringförmingen Element (6, 6') wegzubewegen, wenn die Schraubenbolzen (9) vorwärts bewegt werden.

4. Verfahren zur Entfernung der Formteile gemäß einem der Ansprüche 1 bis 3 von dem geformten rohrförmigen Körper (10), dadurch gekennzeichnet, daß das Hauptgehäuse (1) der Form und das muffenformende Element (2, 2') von dem rohrförmigen Körper (10) weggezogen werden, indem eine Baueinheit aus dem miteinander verbundenen muffenformenden Element (2, 2') und dem Hauptgehäuse (1) gegen das ringförmige Element (6) gedrückt wird.

5. Verfahren zur Entfernung der Formteile gemäß einem der Ansprüche 1 bis 3 von dem geformten rohrförmigen Körper (10), dadurch gekennzeichnet, daß das Hauptgehäuse (1) von dem ausgehärteten rohrförmigen Körper (10) entfernt wird, indem es gegen das muffenformende Element (2, 2') gedrückt wird, und dadurch das Hauptgehäuse (1) und das muffenformende Element (2, 2') relativ zueinander gleitend bewegt werden.

6. Verfahren nach Anspurch 5, dadurch gekennzeichnet, daß das Herausziehen des muffenformenden Elements (2, 2') aus dem ausgehärteten rohrförmigen Körper (10) durchgeführt wird, indem das muffenformende Element (2, 2') gegen das ringförmige Element (6, 6') gedrückt wird und dadurch das muffenformende Element (2, 2') und das ringförmige Element (6, 6') relativ zueinander gleitend bewegt werden.

Fig. I

*Fig. 2*

Fig. 3

Fig. 4

Fig. 5

4

Fig. 6

Fig. 7

Fig. 8  ·          Fig. 9          Fig. 10

0 038 555